(19) Europäisches Patentamt
European Patent Office
Office européen des brevets

(11) **EP 3 581 341 B1**

(12) **EUROPÄISCHE PATENTSCHRIFT**

(45) Veröffentlichungstag und Bekanntmachung des Hinweises auf die Patenterteilung:
**23.12.2020 Patentblatt 2020/52**

(51) Int Cl.:
***B25J 9/16*** *(2006.01)*

(21) Anmeldenummer: **18177548.7**

(22) Anmeldetag: **13.06.2018**

(54) **VERFAHREN ZUM BETREIBEN EINES ROBOTERS, DATENSPEICHER MIT EINEM ENTSPRECHENDEN PROGRAMMCODE, ROBOTER UND ROBOTERSYSTEM**

METHOD FOR OPERATING A ROBOT, DATA STORAGE HAVING A PROGRAM CODE, ROBOT AND ROBOT SYSTEM

PROCÉDÉ DESTINÉ AU FONCTIONNEMENT D'UN ROBOT, SUPPORT DE DONNÉES POURVU D'UN CODE DE PROGRAMME CORRESPONDANT, ROBOT ET SYSTÈME DE ROBOT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**18.12.2019 Patentblatt 2019/51**

(73) Patentinhaber: **Siemens Healthcare GmbH 91052 Erlangen (DE)**

(72) Erfinder:
• **Mebarki, Rafik 90762 Fürth (DE)**
• **Mönnich, Holger 86316 Friedberg (DE)**

(56) Entgegenhaltungen:
**EP-A2- 1 591 209     EP-A2- 2 093 002**

• **PASHKEVICH A P ET AL: "Computer-aided programming of robotic manufacturing cells for laser cutting applications", EMERGING TECHNOLOGIES AND FACTORY AUTOMATION, 2001. PROCEEDINGS. 2001 8TH IEEE INTERNATIONAL CONFERENCE ON OCT. 15-18, 2001, PISCATAWAY, NJ, USA,IEEE, 15. Oktober 2001 (2001-10-15), Seiten 603-612, XP010589021, ISBN: 978-0-7803-7241-2**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Betreiben eines Roboters, einen Datenspeicher mit einem entsprechenden Programmcode, einen entsprechenden Roboter und ein entsprechendes Robotersystem.

In vielen Bereichen der Technik und Industrie finden Roboter mit beweglichen Roboterarmen heutzutage zunehmend Verbreitung. Diese Roboter können beispielsweise Bauteile oder Werkzeuge an einer vorgegebenen Stelle und in einer vorgegebenen Orientierung oder Ausrichtung, also in einer vorgegebenen Pose, im Raum positionieren. Dies ist im Allgemeinen ein 6D-Problem, also ein Problem mit oder in sechs Dimensionen. Dies sind drei Punkt- oder Raumkoordinaten für die Position und drei Winkel für die Orientierung. Wird das jeweilige Bauteil oder Werkzeug zwischen zwei verschiedenen Posen bewegt, so gehen damit üblicherweise Rotationen oder Rotationsbewegungen des Roboters und des Werkzeugs einher. Diese können dazu führen, dass ein an dem Bauteil oder Werkzeug oder an dem Roboter angeordneter Marker, welcher in an sich bekannter Art und Weise zum Nachverfolgen (Tracking) des Bauteils oder Werkzeugs beziehungsweise des Roboters verwendet werden kann, sich aus einem Erfassungsbereich einer entsprechenden Erfassungseinrichtung - beispielsweise einer Kamera - bewegt oder beispielsweise durch den Roboter verdeckt wird.

Ist jedoch eine Rotation des zu bewegenden Bauteils oder Werkzeugs um eine bestimmte vorgegebene Achse für eine Anwendung oder Funktion des Werkzeugs unerheblich, so reduziert sich das 6D-Problem um eine Dimension auf ein 5D-Problem, da eine Rotation um die entsprechende vorgegebene Achse effektiv keine Auswirkung auf die korrekte Anordnung des Bauteils oder Werkzeugs in der vorgegebenen Pose hat. Dieser Umstand kann vorteilhaft ausgenutzt werden. EP 1 591 209 offenbart ein Verfahren zum Steuern eines Roboters, so dass die Steuerung unter Berücksichtigung bearbeitungsprozess-eigener Freiheitsgrade zur Vermeidung kinematischer Zwangslagen erfolgt.

Aufgabe der vorliegenden Erfindung ist es, eine Positionierung eines Werkzeugs oder Bauteils durch einen Roboter mit verbesserter Nachverfügbarkeit zu ermöglichen.

Diese Aufgabe wird erfindungsgemäß durch die Gegenstände der unabhängigen Patentansprüche gelöst. Vorteilhafte Ausgestaltungen und Weiterbildungen der Erfindung sind in den abhängigen Patentansprüchen angegeben.

Ein erfindungsgemäßes Verfahren dient zum Betreiben eines Roboters zum Positionieren eines, insbesondere um eine vorgegebene Achse funktionell rotationssymmetrischen, Werkzeugs in einer Zielpose. Der Roboter weist dabei einen Roboterfuß und einen sich daran anschließenden beweglichen Roboterarm auf, an dessen distalem - also von dem Roboterfuß abgewandten oder entfernten - Ende ein Roboterflansch angeordnet ist, an dem das Werkzeug direkt oder indirekt, also zumindest mittelbar, gehalten ist. Der Roboterfuß ist dabei fest oder starr positioniert, beispielsweise in Bezug auf ein festes Raumkoordinatensystem eines Raumes, in dem sich der Roboter befindet, und/oder in Bezug auf ein Werkstück oder Zielobjekt. Der Roboter, insbesondere das Werkzeug, wird also relativ zu diesem Werkstück oder Zielobjekt positioniert, beispielsweise um mit diesem zu interagieren oder um eine Interaktion mit diesem in vorgegebener Art und Weise zu ermöglichen. Der Roboterarm ist relativ zu dem Roboterfuß und somit insbesondere auch relativ zu dem Zielobjekt beweglich. Dazu kann der Roboterarm bevorzugt wenigstens sechs Freiheitsgrade aufweisen, beispielsweise realisiert durch entsprechende Gelenke und/oder Rotationsachsen. Der Roboter kann also beispielsweise ein herkömmlicher Industrieroboter oder ein medizinischer Roboter, insbesondere ein Leichtbauroboter, sein.

Der Begriff Werkzeug ist hier sehr breit auszulegen und kann prinzipiell jegliche von dem Roboter gehaltene oder geführte Objekte umfassen, also beispielsweise auch ein Werkstück oder Halbzeug oder dergleichen. Das Zielobjekt kann in einem bevorzugten Anwendungsfall beispielsweise ein Patient sein. Das Werkzeug kann dann beispielsweise eine Führungshülle für eine Nadel, einen Injektor oder dergleichen sein (NGS, englisch: "Needle-Guide Sheath"). Die Zielpose dieser Führungshülle kann dann so vorgegeben sein, dass die Nadel oder Injektor durch die in der Zielpose angeordnete Führungshülle geführt werden und dann einen vorgegebenen Zielpunkt an dem Patienten in oder aus einer vorgegebenen Bewegungsrichtung erreichen kann. Es ist in diesem Beispiel besonders anschaulich nachvollziehbar, dass eine Rotation um eine Längsachse der Führungshülle unerheblich, also ohne Auswirkung auf eine Anwendung oder Funktion der Führungshülle ist, wenn die Nadel oder der Injektor entlang dieser Längsachse durch die Führungshülle geführt wird. Die entsprechende Positionierung des Roboters und des Werkzeugs findet im Rahmen der vorliegenden Erfindung insbesondere vollständig außerhalb des Patienten, insbesondere ohne Kontakt zu dem Patienten, statt. Die Anwendung des erfindungsgemäßen Verfahrens stellt also explizit keinen chirurgischen Schritt dar. Ebenso sind jedoch andere Anwendungen denkbar, beispielsweise für einen Zusammenbau komplexer Baugruppen und/oder zur Materialbearbeitung oder dergleichen mehr. In letzterem Fall ist beispielsweise eine beim Positionieren eines Bohrers oder dergleichen auftretende Rotation um dessen Längsachse unerheblich, da der Bohrer bei dessen Anwendung ohnehin um diese Längsachse rotiert.

Allgemein kann das erfindungsgemäße Verfahren also besonders vorteilhaft zum Positionieren eines Werkzeugs angewendet werden, welches rotationssymmetrisch ist und/oder dessen Funktion, Anwendung oder Einsatz nicht von einer Rotation oder Drehstellung bezüglich zumindest einer Achse bei dem Positionieren abhängt oder beeinflusst oder beeinträchtigt wird. Die entsprechende Achse kann also in geometrischer und/oder in funktioneller Hinsicht eine Symmetrieachse sein. Der gegebenenfalls im Folgenden verwendete Begriff "Symmetrieachse" ist also nicht rein geometrisch zu verstehen. Ebenso kann beispielsweise eine diskrete Symmetrie hinsichtlich Rotationen um diese Achse gegeben sein, sodass also nur Rotationen um bestimmte diskrete Winkelbeträge zu einer geometrischen Entsprechung der jeweiligen Stellungen des Werkzeugs führen. Ebenso kann es möglich sein, dass das Werkzeug um die entsprechende Achse rotierbar oder drehbar von dem Roboter, insbesondere an dem Roboterflansch, gehalten ist. Das Werkzeug kann dann beispielsweise von einem Benutzer oder Anwender nach dem Positionieren des Werkzeugs in der vorgegebenen Zielpose manuell in eine gewünschte Rotations- oder Drehstellung bewegt werden.

Bei dem erfindungsgemäßen Verfahren wird die entsprechende Achse des Werkzeugs vorgegeben, um welche Rotationen wie beschrieben unerheblich sind. Weiter wird bei dem erfindungsgemäßen Verfahren ein kartesisches Referenzkoordinatensystem {0} mit Ursprung an oder in dem Roboterfuß vorgegeben. Des Referenzkoordinatensystem {0} weist also drei jeweils paarweise senkrecht zueinander stehende Koordinatenachsen auf, die im Folgenden als $\mathbf{x}_0$, $\mathbf{y}_0$ und $\mathbf{z}_0$ bezeichnet werden, und steht in einer vorgegebenen und festen oder konstanten räumlichen Lagebeziehung zu dem Roboterfuß. Weiter wird ein kartesisches Zielkoordinatensystem {r} mit Ursprung an einem Punkt des Werkzeugs, bevorzugt an einer Spitze des Werkzeugs, einer der vorgegebenen Achse des Werkzeugs entsprechenden z-Achse und je einer x-Achse und y-Achse mit zunächst unbestimmten Orientierungen vorgegeben. Weiter werden 3D-Raumkoordinaten $^0\mathbf{t}_r$ des Punktes des Werkzeugs und eine Orientierung der vorgegebenen Achse, jeweils ausgedrückt in dem Referenzkoordinatensystem {0}, als Teil der Zielpose für das Werkzeug vorgegeben. Anschließend werden die im Referenzkoordinatensystem {0} ausgedrückten Orientierungen der x-Achse und der y-Achse des Zielkoordinatensystems {r} berechnet.

Dazu werden ein erstes Kreuzprodukt und ein zweites Kreuzprodukt berechnet. Das erste Kreuzprodukt wird berechnet aus der vorgegebenen Orientierung der vorgegebenen Achse, also der Orientierung oder Richtung der z-Achse des Zielkoordinatensystems {r}, und einem dazu nicht parallelen oder dazu nicht kollinearen Richtungsvektors einer Koordinatenachse des Referenzkoordinatensystems {0}. Das zweite Kreuzprodukt wird berechnet aus einem Ergebnis des ersten Kreuzproduktes und der in dem Referenzkoordinatensystem {0} ausgedrückten vorgegebenen Orientierung der vorgegebene Achse, also der z-Achse des Zielkoordinatensystems {r}. Anschließend wird eine 4x4 Matrix erzeugt, welche eine Pose $^0\mathbf{H}_r$ des Zielkoordinatensystems {r} in Bezug auf das Referenzkoordinatensystem {0} definiert, aus den jeweils in dem Referenzkoordinatensystem {0} ausgedrückten Orientierungen der Koordinatenachsen des Zielkoordinatensystems {r} und aus den ebenfalls in dem Referenzkoordinatensystem {0} ausgedrückten 3D-Raumkoordinaten des Punktes des Werkzeugs sowie aus einem zusätzlichen 1x4 Zeilenvektor. Der zusätzliche 1x4 Zeilenvektor kann insbesondere die Form (0, 0, 0, 1) haben und dient dazu die Matrix aufzufüllen, sodass diese eine quadratische Form erhält. Das mathematische Objekt $^0\mathbf{H}_r$ kann dabei die 4x4 Matrix selbst sein. Diese Matrix wird auch als die entsprechende homogene Matrix oder als vollständige homogene Matrix bezeichnet.

Die verschiedenen Vorgaben können beispielsweise durch Abrufen entsprechender Daten von einem bereitgestellten Datenspeicher und/oder durch manuelle Eingaben - etwa über ein graphisches Benutzerinterface - erfolgen.

Im Sinne der vorliegenden Erfindung meint eine Pose eine Kombination aus einem räumlichen Ort und einer Orientierung oder Richtung, wie dies auf dem technischen Gebiet der Robotik üblich ist. Die Orientierung kann dabei durch einen entsprechenden Vektor, beispielsweise einen Einheits- oder Richtungsvektor angegeben oder definiert sein.

Die vorliegend verwendete Notation mit einem vorangestellten oberen Index und einem nachgestellten unteren Index soll hier kurz durch ein Beispiel erläutert werden. Gemäß dieser Notation bezeichnet $^A\mathbf{R}_B$ eine Orientierung oder Rotation des Koordinatensystems {B} in Bezug auf oder ausgedrückt in einem Koordinatensystem {A}, wobei $\mathbf{R}$ eine Rotationsmatrix sein kann. Entsprechendes gilt beispielsweise für einen Translationsvektor $\mathbf{t}$, dann geschrieben als $^A\mathbf{t}_B$ und eine homogene Matrix H, dann geschrieben als $^A\mathbf{H}_B$. Die Koordinatenachsen des Koordinatensystems {B} ausgedrückt im Koordinatensystem A werden gemäß dieser Notation also geschrieben als $^A x_B$, $^A y_B$, $^A z_B$.

Mit anderen Worten wird also eine Methode vorgeschlagen, eine Orientierung oder Ausrichtung des Zielkoordinatensystems {r} in Bezug auf das ortsfeste Referenzkoordinatensystem {0} zu bestimmen oder zu berechnen. Da die z-Achse des Zielkoordinatensystems {r} durch die vorgegebene Achse oder Symmetrieachse des Werkzeugs vorgegeben ist, besteht ein zentraler Beitrag der vorliegenden Erfindung zum technischen Feld der Robotersteuerung in der Bestimmung der x- und y-Achsen des Zielkoordinatensystems {r} beziehungsweise in dem Bestimmen von deren Orientierung oder Ausrichtung. Eine besondere Eigenschaft und ein klarer Vorteil der vorliegenden Erfindung bestehen darin, dass sich bei Anwendung des erfindungsgemäßen Verfahrens im Betrieb des Roboters eine minimale Rotation des Werkzeugs ergibt. Die vorliegende Erfindung vermeidet also letztlich unnötige rotatorische Bewegungen des Werkzeugs. Dies ist beispielsweise dann besonders vorteilhaft, wenn an dem Werkzeug oder im Bereich des Werkzeugs ein Marker zum Nachverfolgen des Werkzeugs oder des Roboters angeordnet ist. Durch die aus der vorliegenden Erfindung resultierende inhärent rotations-minimale Bewegung des Werkzeugs beziehungsweise des Roboters kann vorteilhaft eine verbesserte oder zuverlässigere Sichtbarkeit des Markers und somit eine verbesserte, zuverlässigere und sicherere Nachverfolgbarkeit des Werkzeugs beziehungsweise des Roboters erreicht werden. Besonders vorteilhaft kann dies durch die vorliegende Erfindung in analytischer, also eindeutiger Weise mit besonders geringem Rechenaufwand und ohne zusätzlichen Bauteilaufwand erreicht werden. Vorteilhaft kann die vorliegende Erfindung also unter Verwendung existierender Hardware umgesetzt werden. Ein Marker im Sinne der vorliegenden Erfindung ist ein Objekt, welches so ausgestaltet ist, dass seine Orientierung im Raum aus jeder Perspektive eindeutig bestimmbar ist. Der Marker kann beispielsweise ein optischer oder elektromagnetischer Marker sein, welcher entsprechend beispielsweise mit einer Kamera oder einem entsprechenden Sensor erfasst werden kann. Es können je nach Anwendung beispielsweise sichtbares Licht, Infrarotlicht, Radiofrequenzen, Röntgenstrahlung oder dergleichen mehr eingesetzt werden.

In vorteilhafter Weiterbildung der vorliegenden Erfindung wird durch das erste Kreuzprodukt die Orientierung $^0\mathbf{y}_r$ der y-Achse des Zielkoordinatensystems {r} berechnet als

$$^0\mathbf{y}_r = {}^0\mathbf{z}_r \times \mathbf{x}_0$$

berechnet. Durch das zweite Kreuzprodukt wird die Orientierung $^0\mathbf{x}_r$ der x-Achse des Zielkoordinatensystems {r} berechnet als

$$^0\mathbf{x}_r = {}^0\mathbf{y}_r \times {}^0\mathbf{z}_r \quad .$$

Dies gilt zumindest für den Fall, dass $^0\mathbf{z}_r$, also die z-Achse des Zielkoordinatensystems {r} und damit die vorgegebene Achse oder Symmetrieachse des Werkzeugs nicht kollinear mit der x-Achse $\mathbf{x}_0$ des Referenzkoordinatensystems {0} ist.

Für den Fall, dass die der vorgegebenen Achse des Werkzeugs entsprechende z-Achse des Zielkoordinatensystems {r}, also $\mathbf{z}_r$ beziehungsweise $^0\mathbf{z}_r$, parallel oder kollinear ist zu der x-Achse $\mathbf{x}_0$ des Referenzkoordinatensystems {0}, werden die Orientierungen $^0\mathbf{x}_r$ und $^0\mathbf{y}_r$ durch das erste und zweite Kreuzprodukt berechnet als

$$^0\mathbf{x}_r = \mathbf{y}_0 \times {}^0\mathbf{z}_r \quad \text{und} \quad {}^0\mathbf{y}_r = {}^0\mathbf{z}_r \times {}^0\mathbf{x}_r \quad .$$

Dabei geben jeweils $\mathbf{x}_0$ und $\mathbf{y}_0$ die x- beziehungsweise y-Achsen des Referenzkoordinatensystems {0} und $^0\mathbf{x}_r$, $^0\mathbf{y}_r$, $^0\mathbf{z}_r$ die Koordinatenachsen des Zielkoordinatensystems {r} ausgedrückt im Referenzkoordinatensystem {0} in vektorieller Form an. Mit anderen Worten kann für den Fall, dass die vorgegebene Achse des Werkzeugs zufällig parallel zu der x-Achse $\mathbf{x}_0$ des Referenzkoordinatensystems ausgerichtet ist, anstatt der x-Achse $\mathbf{x}_0$ die y-Achse $\mathbf{y}_0$ des Referenzkoordinatensystems {0} als Basis oder Referenz für die Berechnung der Orientierungen der x- und y-Achsen des Zielkoordinatensystems verwendet werden. Ein Winkel zwischen $^0\mathbf{z}_r$ und $\mathbf{x}_0$ kann abgeleitet werden, da die die Ausrichtung oder Orientierung des Referenzkoordinatensystems {0} fest und bekannt ist. Dadurch kann vorteilhaft in jedem Fall eine rotations-minimale, also hinsichtlich der Nachverfolgbarkeit und der Sichtbarkeit besonders sichere, Bewegung des Werkzeugs in die Zielpose erreicht werden. Besonders vorteilhaft kann dies dann also unabhängig von der Orientierung der vorgegebenen Achse des Werkzeugs mit dem gleichen besonders geringen Rechenaufwand erreicht werden.

In weiterer vorteilhafter Ausgestaltung der vorliegenden Erfindung wird eine zu der Pose $^0\mathbf{H}_r$ beziehungsweise zu der entsprechenden homogenen Matrix des Zielkoordinatensystems {r} korrespondierende und in diesem ausgedrückte Pose oder homogene Matrix $^r\mathbf{H}_f$ des Roboterflansches bestimmt aus einer vorgegebenen Kalibrierung, welche eine räumliche Lagebeziehung zwischen dem Punkt des Werkzeugs, also beispielsweise der Spitze des Werkzeugs, und dem Roboterflansch angibt. Der Index f steht dabei für den Roboterflansch beziehungsweise ein kartesisches Koordinatensystem des Roboterflansches, welches also seinen Ursprung in oder an dem Roboterflansch hat und in welchem die Pose des Roboterflansches direkt beschrieben werden kann.

Die Kalibrierung kann beispielsweise einmalig vor den oben beschriebenen Verfahrensschritten und/oder beispielsweise bei jedem Start oder jeder Inbetriebnahme des Roboters und/oder beispielsweise bei einem Wechsel des Werkzeugs durchgeführt werden. Das Werkzeug kann austauschbar sein, sodass also unterschiedliche Werkzeuge durch denselben Roboter gehalten oder geführt werden können. Demgegenüber ist der Roboterflansch integraler Bestandteil des Roboters. Befindet sich der Roboterflansch in der Pose $^r\mathbf{H}_f$, so ist damit sichergestellt, dass sich das Werkzeug in der vorgegebenen Zielpose befindet. Die Umrechnung der Zielpose des Werkzeugs in die korrespondierende Pose $^r\mathbf{H}_f$ des Roboterflansches ist dabei besonders vorteilhaft, da diese dann als direkte Eingangs- oder Zielgröße für eine typischerweise ohnehin vorhandene modellbasierte Steuerung oder Kinematik des Roboters verwendet werden kann, unabhängig davon, welches Werkzeug verwendet wird oder in welcher räumlichen Lagebeziehung zu dem Roboterflansch das Werkzeug montiert ist. Dadurch kann das erfindungsgemäße Verfahren also mit minimalen Modifikationen bestehender Roboter oder Robotersteuerungen angewendet werden.

In vorteilhafter Weiterbildung der vorliegenden Erfindung wird für die Kalibrierung ein, insbesondere optischer, Marker in vorgegebener Lagebeziehung zu dem Punkt des Werkzeugs an diesem oder an dem Roboter angeordnet. Der optische Marker wird dann mittels einer Erfassungseinrichtung, welche in einer vorgegebenen Lagebeziehung zu dem Roboterfuß angeordnet ist, in einem Hilfskoordinatensystem {e} mit Ursprung an dem Punkt des Werkzeugs und relativ zu dem Zielkoordinatensystem {r} zunächst unbestimmter Orientierung erfasst. Aus entsprechenden Erfassungsdaten des Markers wird dann eine räumliche Lagebeziehung, also Orientierung, des Hilfskoordinatensystems eh relativ zu dem Roboterflansch bestimmt. Die Pose $^\mathrm{r}\mathbf{H}_\mathrm{f}$ des Roboterflansches wird dann bestimmt aus den im Referenzkoordinatensystem {0} ausgedrückten Orientierungen der Achsen des Zielkoordinatensystems {r} und einer vorgegebenen Vorwärtskinematik des Roboters unter Ausnutzung der Ursprungsgleichheit des Zielkoordinatensystems {r} und des Hilfskoordinatensystems {e}. Der Marker kann also in zunächst beliebiger räumlicher Lagebeziehung und Orientierung angeordnet sein. Das Hilfskoordinatensystem {e} kann bevorzugt durch die jeweilige Orientierung des Markers, also in Abhängigkeit von der jeweiligen Orientierung des Markers vorgegeben oder festgelegt sein. Somit wird vorteilhaft eine besonders einfache und flexible Durchführung der Kalibrierung ermöglicht.

In vorteilhafter Weiterbildung der vorliegenden Erfindung wird aus den Posen $^0\mathbf{H}_\mathrm{r}$ und $^\mathrm{r}\mathbf{H}_\mathrm{f}$ eine zu der bestimmten Pose $^0\mathbf{H}_\mathrm{r}$ des Zielkoordinatensystems {r} korrespondierende Pose $^0\mathbf{H}_\mathrm{f}$ des Roboterflansches in Bezug auf das oder ausgedrückt in dem Referenzkoordinatensystem {0} bestimmt als

$$^0\mathbf{H}_\mathrm{f} \;=\; {}^0\mathbf{H}_\mathrm{r} \; {}^\mathrm{r}\mathbf{H}_\mathrm{f} \qquad .$$

**H** gibt dabei jeweils die entsprechende homogene 4x4 Matrix an. Mit anderen Worten wird also bestimmt, wie der Roboterflansch in Bezug auf das oder ausgedrückt in dem Referenzkoordinatensystem {0} positioniert werden muss, damit das Werkzeug in die vorgegebene Zielpose gelangt. Dies ermöglicht vorteilhaft eine besonders einfache Ansteuerung des Roboters, da der Roboterflansch stets in bekannter Lagebeziehung zu dem ortsfesten Roboterfuß steht und beispielsweise durch ein vorgegebene Modell oder eine vorgegebene Kinematik des Roboters modelliert ist.

In weiterer vorteilhafter Ausgestaltung der vorliegenden Erfindung wird aus den bestimmten Größen und einem vorgegebenen Kinematikmodell des Roboters automatisch ein Steuersignal für den Roboter erzeugt, durch welches der Roboter aus seiner jeweils aktuellen Pose so bewegt wird, dass das Werkzeug in die für dieses vorgegebene Zielpose gelangt oder überführt wird. Mit anderen Worten wird also die vorliegende Erfindung nicht nur beispielsweise für theoretische oder modellbasierte Anwendungen, sondern für den tatsächlichen Betrieb des Roboters eingesetzt. Dadurch können die beschriebenen Vorteile, die sich durch Anwendung des erfindungsgemäßen Verfahrens bei der Steuerung des Roboters ergeben, also praktisch realisiert werden.

In weiterer vorteilhafter Ausgestaltung der vorliegenden Erfindung wird anhand eines vorgegebenen Kinematikmodells des Roboters automatisch überprüft, ob die für das Werkzeug vorgegebene Zielpose durch den Roboter erreichbar ist. Hier können beispielsweise Einschränkungen durch mechanische Beschränkungen in einer Umgebung des Roboters, Limitierungen in einem Bewegungsumfang von Gelenken des Roboterarms, Singularitäten in dem Kinematikmodell und/oder dergleichen mehr auftreten, welche verhindern können, dass der Roboter die vorgegebene Zielpose erreichen kann. Kann der Roboter die für das Werkzeug vorgegebene Zielpose nicht erreichen oder einstellen, so wird das Zielkoordinatensystem {r}, also dessen bestimmte Orientierung, solange bis eine erreichbare Zielpose gefunden ist um vorgegebene, inkrementell ansteigende Winkelbeträge abwechselnd in positive und negative Richtung um seine z-Achse rotiert. Dabei wird für jede Rotation oder Rotationsbewegung in Bezug auf eine jeweils vorhergehende Rotation oder Rotationsbewegung eine Rotationsrichtung gewechselt und der jeweils nächst größere der vorgegebenen Winkelbeträge verwendet. Der Winkel für die Rotationen wird also - hinsichtlich seines Betrages und seiner Richtung - gemäß einer vorgegebenen Sequenz eingestellt, insbesondere erhöht. Zudem wird nach jeder Rotation oder Rotationsbewegung die Überprüfung, ob die resultierende Zielpose erreichbar ist, erneut durchgeführt. Es kann also nach einer jeweiligen Rotation des Zielkoordinatensystems {r} die jeweils neue korrespondiere Pose $^0\mathbf{H}_\mathrm{f}$ für den Roboterflansch ebenfalls bestimmt werden. Als Winkelinkrement kann bevorzugt ein kleiner Winkel, beispielsweise ein Winkel oder Winkelbetrag von höchstens 15°, bevorzugt von beispielsweise 5°, vorgegeben sein, also verwendet werden.

Mit anderen Worten kann also beispielsweise für eine erste Rotation das Zielkoordinatensystem {r} um 5° in positive Richtung rotiert werden. Ist auch die dann resultierende Zielpose nicht erreichbar, so kann das Zielkoordinatensystem {r} in negative Richtung rotiert werden. Dabei kann der Winkelbetrag für die Rotation in negative Richtung um ein Winkelinkrement auf dann also beispielsweise 10° erhöht werden. Damit ist das Zielkoordinatensystem {r} dann nach dieser Rotation um 5° in negative Richtung rotiert bezogen auf die ursprüngliche Orientierung vor der Rotation in positive Richtung. Ist auch die daraus resultierende Zielpose nicht erreichbar, so kann ausgehend von dieser neuen Stellung das Zielkoordinatensystem {r} wieder in Gegenrichtung, also in positive Richtung, rotiert werden, beispielsweise um 15° usw.

Durch dieses Vorgehen kann vorteilhaft automatisch besonders zuverlässig eine Zielpose gefunden werden, welche mit besonders großer Wahrscheinlichkeit die Sichtbarkeit oder Nachverfolgbarkeit weiterhin ermöglicht beziehungsweise möglichst geringem Maße einschränkt. Da das Werkzeug rotationssymmetrisch bezüglich der z-Achse des Zielkoordinatensystems {r} ist und/oder Rotationen des Werkzeugs um diese Achse unerheblich sind, also für die Steuerung oder den Betrieb des Roboters vernachlässigt werden können und/oder keinen Einschränkungen unterliegt, hat die Rotation des Zielkoordinatensystems {r} vorteilhaft keine praktische Auswirkung auf die letztlich von dem Werkzeug eingenommene Zielpose. Das Rotieren des Zielkoordinatensystems {r}um dessen z-Achse ist also lediglich für die Bewegung des Roboterarms zum Einstellen oder Anfahren der Zielpose für das Werkzeug beziehungsweise des Roboterflansches relevant. Hierin drückt sich aus, dass es sich bei dem ursprünglichen Positionierungsproblem wie erläutert effektiv um ein 5D-Problem handelt.

Ein weiterer Aspekt der vorliegenden Erfindung ist ein Datenspeicher mit einem Programmcode, der die Verfahrensschritte zumindest einer Ausführungsform des erfindungsgemäßen Verfahrens kodiert oder repräsentiert. Der Programmcode ist also ein Computerprogrammprodukt, welcher durch eine Prozessoreinrichtung ausführbar ist, was wiederum in der automatischen Ausführung oder Durchführung des entsprechenden erfindungsgemäßen Verfahrens resultiert. Der Programmcode kann dabei in verschiedenen Programmiersprachen verfasst sein. Je nach konkreter Anforderung können beispielsweise C, C++, Java, Python, Octavia, MATLAB, Fortran oder andere verwendet werden.

Ein weiterer Aspekt der vorliegenden Erfindung ist ein Roboter mit einem Steuergerät zum Steuern des Roboters. Dieses Steuergerät umfasst dabei einen erfindungsgemäßen Datenspeicher und eine mit diesem verbundene Prozessoreinrichtung zum Ausführen des in dem Datenspeicher gespeicherten oder abgelegten Programmcodes. Darüber hinaus weist das Steuergerät beziehungsweise der Roboter eine Schnittstelle zum Empfangen von Vorgaben auf. Über diese Schnittstelle können beispielsweise das Referenzkoordinatensystem {0}, das Zielkoordinatensystem {r} und/oder die Zielpose für das Werkzeug vorgegeben werden. Die Schnittstelle kann also eine Datenschnittstelle sein, welche mit einer weiteren elektronischen Einrichtung verbunden sein kann, beispielsweise mit einem weiteren Datenspeicher, einem weiteren Steuergerät und/oder einem Benutzerinterface. Der erfindungsgemäße Roboter kann also zum Durchführen oder Ausführen des erfindungsgemäßen Verfahrens eingerichtet sein und dementsprechend kann der erfindungsgemäße Roboter also insbesondere der im Zusammenhang mit dem erfindungsgemäßen Verfahren genannte Roboter sein. Der erfindungsgemäße Roboter kann dementsprechend auch die im Zusammenhang mit dem erfindungsgemäßen Verfahren genannten Eigenschaften und/oder Bauteile oder Einrichtungen aufweisen.

Ein weiterer Aspekt der vorliegenden Erfindung ist ein Robotersystem, welches einen erfindungsgemäßen Roboter und eine mit diesem gekoppelte und in einer vorgegebenen Lagebeziehung zu diesem Roboter angeordnete Erfassungseinrichtung zum Erfassen wenigstens eines an dem Roboter angeordneten Markers umfasst. Das erfindungsgemäße Robotersystem ist dabei dazu eingerichtet, aus von der Erfassungseinrichtung bereitgestellten Erfassungsdaten des Markers automatisch eine Orientierung des Markers, also dessen räumliche Anordnung und Lage, zu bestimmen. Insbesondere ist das Robotersystem dazu eingerichtet, diese bestimmte Orientierung des Markers zum oder beim Betrieb des Roboters zu verwenden, beispielsweise für die im Zusammenhang mit dem erfindungsgemäßen Verfahren erläuterte Kalibrierung. Mit anderen Worten ist das erfindungsgemäße Robotersystem also zum Ausführen oder Durchführen zumindest einer Ausführungsform des erfindungsgemäßen Verfahrens eingerichtet. Die Erfassungseinrichtung und der Marker des erfindungsgemäßen Robotersystems können dementsprechend also insbesondere die im Zusammenhang mit dem erfindungsgemäßen Verfahren genannte Erfassungseinrichtung oder Kamera beziehungsweise der im Zusammenhang mit dem erfindungsgemäßen Verfahren genannte, insbesondere optische, Marker sein.

Die bisher und im Folgenden angegebenen Eigenschaften und Weiterbildungen des erfindungsgemäßen Verfahrens sowie die entsprechenden Vorteile sind jeweils sinngemäß auf die anderen Aspekte der Erfindung, also auf den erfindungsgemäßen Datenspeicher, den erfindungsgemäßen Roboter und das erfindungsgemäße Robotersystem, und/oder zur Durchführung des erfindungsgemäßen Verfahrens verwendete oder verwendbare Bauteile und Einrichtungen übertragbar und umgekehrt. Es gehören also zu der Erfindung auch solche Weiterbildungen der einzelnen Aspekte der Erfindung, welche Ausgestaltungen aufweisen, die hier beispielsweise nur für einen dieser Aspekte und/oder nicht explizit in der jeweiligen Kombination beschrieben sind.

Weitere Merkmale, Einzelheiten und Vorteile der vorliegenden Erfindung ergeben sich aus der nachfolgenden Beschreibung bevorzugter Ausführungsbeispiele sowie anhand der Zeichnungen. Dabei zeigen:

FIG 1   eine schematische Darstellung zur Veranschaulichung eines Positionierungsverfahrens für ein Werkzeug gemäß dem Stand der Technik;

FIG 2   eine schematische Perspektivdarstellung eines Robotersystems zur Veranschaulichung eines Positionierungsverfahrens für ein Werkzeug;

FIG 3   einen beispielhaften schematischen Ablaufplan für ein entsprechendes Positionierungsverfahrens.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind gleiche, funktionsgleiche oder einander entsprechende Bauteile oder Elemente gegebenenfalls jeweils mit den gleichen Bezugszeichen gekennzeichnet.

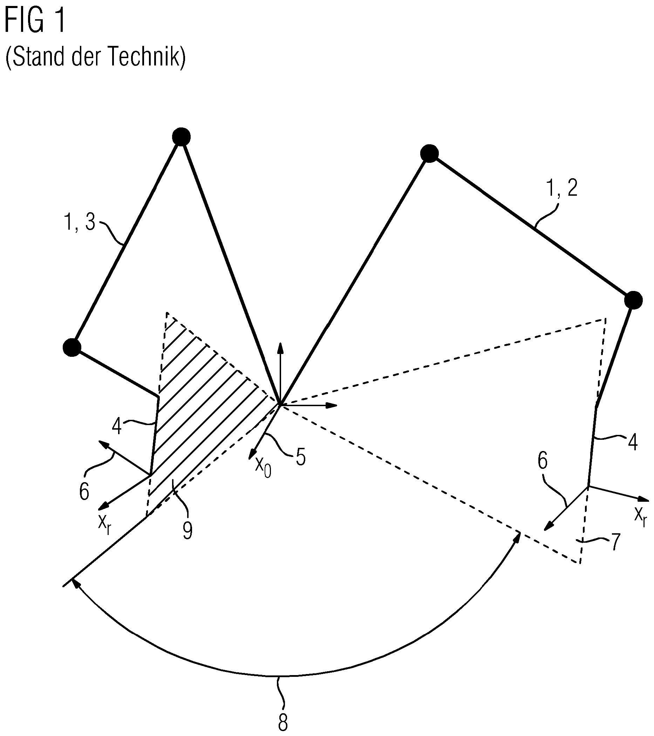

FIG 1 zeigt eine schematische Darstellung zur Veranschaulichung eines robotischen Positionierungsverfahrens gemäß dem Stand der Technik. Dargestellt ist hier ein herkömmlicher Roboter 1 in einer Startpose 2 und einer Endpose 3. An einem Ende des herkömmlichen Roboters 1 ist dabei ein Werkzeug 4 gehalten. An einem gegenüberliegenden Ende des herkömmlichen Roboters 1, also an einem Fuß oder einer Basis des herkömmlichen Roboters 1, ist hier ein Basiskoordinatensystem 5 mit einer x-Achse $x_0$ und zwei weiteren, senkrecht dazu angeordneten Koordinatenachsen dargestellt. An einer Spitze des Werkzeugs 4 ist ein weiteres Koordinatensystem mit einer x-Achse $x_r$ und eine senkrecht dazu angeordneten zweiten Achse 6 angeordnet. Eine dritte Achse dieses weiteren Koordinatensystems verläuft entlang einer vorgegebenen Achse des Werkzeugs, welche hier insbesondere eine Haupterstreckungs- oder Symmetrieachse des Werkzeugs 4 ist.

Um den herkömmlichen Roboter 1 beziehungsweise das Werkzeug 4 aus der Startpose 2 automatisch in die Endpose 3 zu bewegen, sind einige Berechnungen notwendig. In einem bekannten, bisher verwendeten Verfahren wird dazu eine Ebene 7 so aufgespannt, dass sowohl die Symmetrieachse des Werkzeugs 4 als auch ein Ursprung oder Ursprungspunkt des Basiskoordinatensystems 5 in dieser Ebene 7 liegen oder enthalten sind. Die x-Achse $x_0$ beziehungsweise die zweite Achse 6 können dann so definiert sein, dass sie sich senkrecht zu der Ebene 7 erstrecken.

Um den herkömmlichen Roboter 1 beziehungsweise das Werkzeug 4 aus der Startpose 2 in die Endpose 3 zu bewegen, ist unter anderem eine hier durch einen Pfeil angedeutete Rotation 8 vorgesehen. In der Startpose 2 und in der Endpose 3 weist die Symmetrieachse des Werkzeugs 4 im vorliegend dargestellten Beispiel die gleiche Orientierung auf, beispielsweise in Bezug auf das Basiskoordinatensystem 5 und/oder in Bezug auf eine externe Kamera, welche ortsfest in Bezug auf das Basiskoordinatensystem 5 angeordnet ist. Es ist klar erkennbar, dass die Orientierungen der x-Achse $x_r$ und der zweiten Achse 6 in der Endpose 3 grundlegend verschieden sind von den entsprechenden Orientierungen der x-Achse $x_r$ und der zweiten Achse 6 in der Startpose 2. Dies ist darauf zurückzuführen, dass das entsprechende Koordinatensystem an der Spitze des Werkzeugs 4 zum Bestimmen von dessen Orientierung für die Endpose 3 gemeinsam mit der Ebene 7 und dementsprechend zusammen mit dem Werkzeug 4 rotiert werden. Dies ist hier erkennbar an einer Lage einer rotierten Ebene 9, welche der Ebene 7 nach der Rotation 8 entspricht. Durch diese Rotation und die damit einhergehende Veränderung in den Orientierungen der x-Achse $x_r$ und der zweiten Achse 6 von der Startpose 2 zu der Endpose 3 kann ein an dem Werkzeug 4 befestigter Marker mit hoher Wahrscheinlichkeit aus einem Blickfeld einer zu dessen Nachverfolgung vorgesehenen Kamera gelangen. Dieses herkömmliche Verfahren ist also inhärent rotationsbasiert und bedingt daher typischerweise signifikante Rotationsbewegungen. Dies ist im Sinne einer zuverlässigen und sicheren Nachverfolgbarkeit durch eine möglichst kontinuierliche Sichtbarkeit des entsprechenden Markers unerwünscht. Um dies zu vermeiden, ist vorliegend ein anderes Verfahren zum Bestimmen der Orientierungen des an der Spitze des Werkzeugs 4 angeordneten Koordinatensystems für die Endpose 3 vorgesehen, welches nachfolgend erläutert wird.

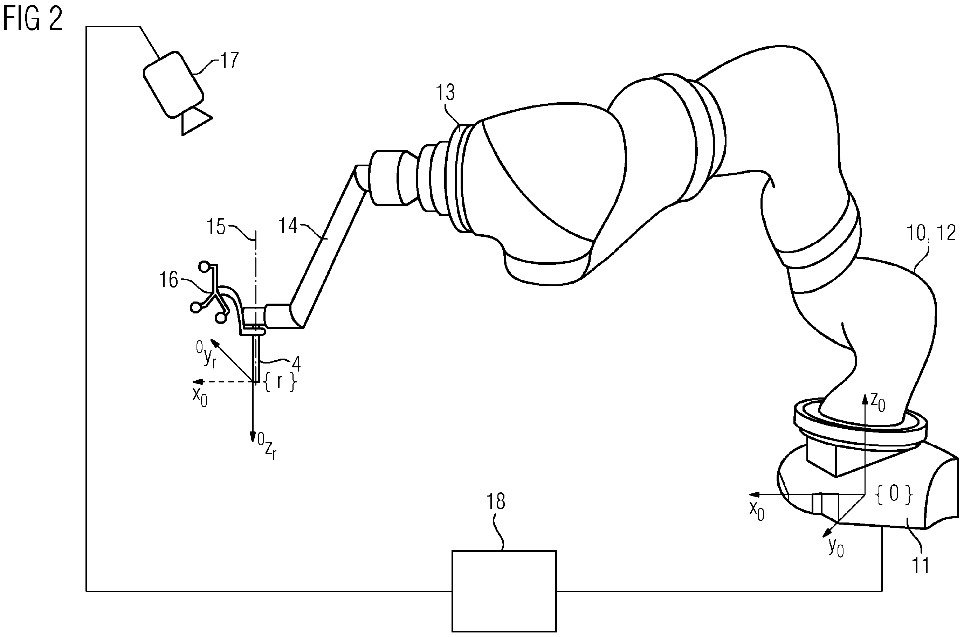

FIG 2 zeigt eine schematische Perspektivdarstellung eines Robotersystems mit einem Roboter 10. Der Roboter 10 umfasst einen statischen, also ortsfesten Roboterfuß 11. Vorliegend ist der Roboterfuß 11 ortsfest in Bezug auf einen umgebenden Raum, in dem der Roboter 10 angeordnet ist. Der Roboter 10 umfasst weiter einen beweglichen Roboterarm 12, der sich ausgehend von dem Roboterfuß 11 erstreckt. An einem distalen, also von dem Roboterfuß 11 abgewandten, Ende des Roboterarms 12 ist ein Roboterflansch 13 des Roboters 10 angeordnet. An diesem Roboterflansch 13 wiederum ist vorliegend ein Verbindungselement 14 zum Halten des Werkzeugs 4 angeordnet. Das Werkzeug 4 ist vorliegend rotationssymmetrisch um eine vorgegebene Rotations- oder Symmetrieachse 15, welche hier schematisch angedeutet ist. Ebenso können jedoch statt des rotationssymmetrischen Werkzeugs 4 in gleicher Weise andere Werkzeuge oder Gegenstände verwendet werden, welche auch nicht rotationssymmetrisch sein müssen. Es kann dann einfach eine bestimmte entsprechende Achse vorgegeben oder definiert werden. Rotationen um diese Achse werden dann als irrelevant gelten oder behandelt.

Weiterhin ist vorliegend an dem Werkzeug 4 ein optischer Marker 16 angeordnet. Dieser Marker 16 ist in an sich bekannter Art und Weise so gestaltet, dass dessen Orientierung beziehungsweise Pose aus jedem äußeren Blickwinkel, also aus jeder beliebigen Perspektive betrachtet, eindeutig bestimmbar ist. Vorliegend ist zum Erfassen des Markers 16 beziehungsweise von dessen Orientierung oder Pose - also letztlich zum Nachverfolgen des Markers 16 und damit des Werkzeugs 4 - eine Kamera 17 vorgesehen. Aus entsprechenden mittels der Kamera 17 aufgenommenen Bilddaten des Markers 16 kann somit stets dessen Orientierung bestimmt und damit das Werkzeug 4 beziehungsweise der Roboter 10 nachverfolgt werden. Dazu ist der Marker 16 insbesondere in einer vorgegebenen räumlichen Lagebeziehung zu dem Werkzeug 4, insbesondere zu dessen Spitze, angeordnet. Weiter ist hier ein mit dem Roboter 10 und mit der Kamera 17 verbundenes Steuergerät 18 zum Steuern des Roboters 10 dargestellt. Der Roboter 10, das Steuergerät 18 und die Kamera 17 können zusammen Robotersystem bilden oder Teil des Robotersystems sein. Das Steuergerät 18 kann ebenso Teil des Roboters 10 und dann beispielsweise in diesen integriert sein.

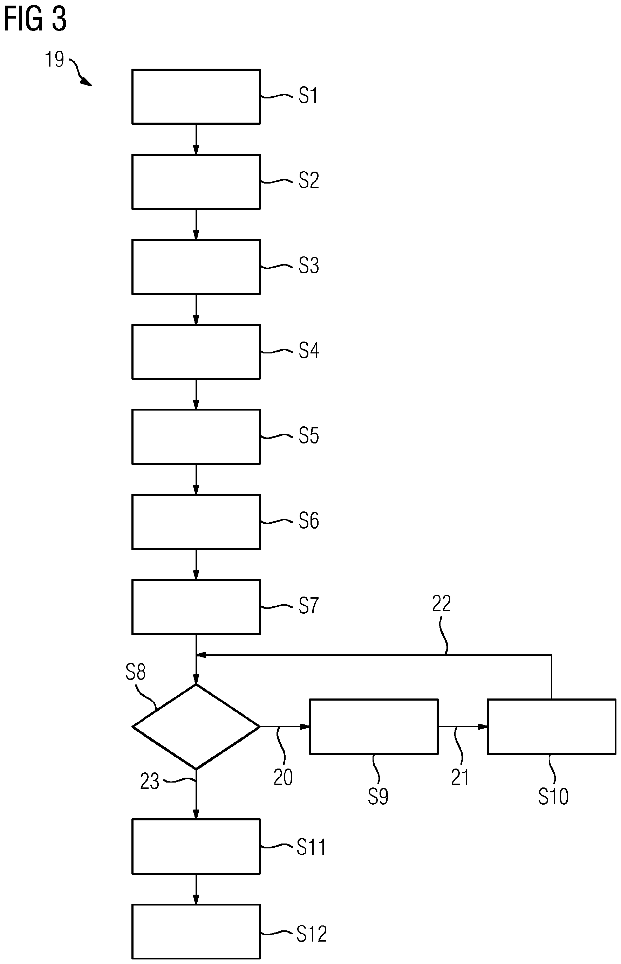

FIG 3 zeigt einen schematischen beispielhaften Ablaufplan 18 für ein Verfahren zum Betreiben des Robotersystems zum Positionieren des Werkzeugs 4 in der Endpose 3 beziehungsweise in einer vorgegebenen Zielpose. Dieses Verfahren wird nun unter Bezugnahme auf FIG 2 erläutert.

Das Verfahren wird in einem Verfahrensschritt S1 gestartet. Hier kann beispielsweise das Robotersystem aktiviert werden. Ebenso kann hier ein Kinematikmodell des Roboters 10, also beispielsweise eine modellbasierte Vorwärtskinematik des Roboters 10, vorgegeben oder bereitgestellt werden.

In einem Verfahrensschritt S2 werden ein kartesischen des Referenzkoordinatensystem {0} und ein kartesisches Zielkoordinatensystem {r} vorgegeben beziehungsweise definiert. Das Referenzkoordinatensystem {0} ist dabei ortsfest an dem Roboterfuß 11 angeordnet. Sowohl ein Ursprung des Referenzkoordinatensystems {0} als auch dessen Koordinatenachsen $x_0$, $y_0$, $z_0$ beziehungsweise deren Orientierungen, insgesamt also eine Pose des Referenzkoordinatensystems {0}, bleiben dabei bei dem Betrieb des Roboters 10, insbesondere bei einer Bewegung des Roboterarms 12 unverändert.

Ein Ursprung des Zielkoordinatensystems {r} ist an der Spitze des Werkzeugs 4 angeordnet. Eine z-Achse $z_r$ des Zielkoordinatensystems {r} fällt mit der vorgegebenen Symmetrieachse 15 des Werkzeugs 4 zusammen.

Ziel ist es vorliegend, letztlich eine 6D- oder 6-DoF-Pose (DoF: "Degrees of Freedom", Freiheitsgrade) des Roboterflansches 13 so zu bestimmen oder zu berechnen, dass bei deren Erreichen die Spitze des Werkzeugs 4 eine vorgegebene 3D-Zielposition im Raum einnimmt und sich zudem die Symmetrieachse 15 in einer vorgegebenen Richtung oder Orientierung erstreckt. Im vorliegenden Beispiel handelt es sich bei dem Werkzeug 4 um eine Führungshülle (NGS) für eine Nadel. Befinden sich der Roboterflansch 13 und somit das Werkzeug 4 in der jeweiligen Zielpose, kann dann die entsprechende Nadel durch die Führungshülle, also durch das Werkzeug 4, hindurch geführt werden, um aus der vorgegebenen Richtung eine bestimmte vorgegebene Stelle eines hier nicht dargestellten Zielobjekts, beispielsweise eines Patienten, zu erreichen. Eine exakte Positionierung des Werkzeugs 4 kann in einem medizinischen Kontext besonders wichtig sein, beispielsweise um eine verletzungsfreie Behandlung des Patienten durchführen zu können. Auch in anderen Anwendungsbereichen ist jedoch eine exakte Positionierung selbstverständlich wichtig und wünschenswert. Aufgrund der entsprechenden Vorgabe der Symmetrieachse 15 beziehungsweise vorliegend aufgrund der Rotationssymmetrie des Werkzeugs 4 bezüglich der vorgegebenen Symmetrieachse 15 ist es klar, dass die durch das Werkzeug 4 geführte Nadel die vorgegebene Zielposition aus der vorgegebenen Richtung unabhängig davon erreichen kann, um welchen Winkel das Werkzeug 4 um die Symmetrieachse 15 rotiert ist. Dies ist unabhängig von Detailausgestaltungen des Werkzeugs 4, wie beispielsweise einer Anordnung von Befestigungs- oder Haltemitteln, Markierungen und/oder dergleichen mehr, welche streng genommen eine rein geometrische Rotationssymmetrie des Werkzeugs 4 brechen. Vorliegend weist das Werkzeug 4 zumindest einen rotationssymmetrischen Innenraum auf, durch welchen die jeweilige Nadel unabhängig von dessen Rotationsstellung um die Symmetrieachse 15 in jeweils gleicher Weise geführt werden kann. Die Rotation des Werkzeugs 4 um die Symmetrieachse 15 beziehungsweise ein entsprechender Winkel ist damit frei, kann also bei dem Positionieren des Roboterflansches 13 beliebig gewählt oder eingestellt werden. Damit ist das Problem des Positionierens des Werkzeugs 4 in der vorgegebenen Zielpose effektiv also ein 5D-Problem. Um den Marker 16 möglichst dauerhaft und kontinuierlich in einem Blickfeld der Kamera 17 zu halten, ist es jedoch wünschenswert, eine Rotation des Werkzeugs 4 um die Symmetrieachse 15 zu minimieren oder sogar zu vermeiden.

Eine in der Zielpose des Werkzeugs 4 zu erreichende oder gegebene Pose des Zielkoordinatensystems {r} ist zunächst nur insoweit bestimmt, als dass der Ursprung des Zielkoordinatensystems {r} an der Spitze des Werkzeugs 4 angeordnet ist und die z-Achse $z_r$ des Zielkoordinatensystems {r} der Symmetrieachse 15 des Werkzeugs 4 entspricht beziehungsweise mit dieser zusammenfällt.

Für das Verfahren wird angenommen oder vorausgesetzt, dass jegliche verwendeten kartesischen Koordinatensysteme, unter anderem also das Zielkoordinatensystem {r}, ausgedrückt werden kann in dem beziehungsweise in Bezug auf das Referenzkoordinatensystem {0}.

In einem Verfahrensschritt S3 wird dann die Zielpose für das Werkzeug 4 vorgegeben als in dem Referenzkoordinatensystem {0} ausgedrückte z-Achse $^0z_r$ des Zielkoordinatensystems {r} und als 3D-Raum- oder -Punktkoordinaten $^0t_r$ des Zielpunktes der Spitze des Werkzeugs 4 - entsprechend dem Ursprung des Zielkoordinatensystems {r} - ebenfalls ausgedrückt in dem Referenzkoordinatensystem {0}.

In einem Verfahrensschritt S4 wird eine Kalibrierung durchgeführt, um eine räumliche Lagebeziehung zwischen der Spitze des Werkzeugs 4 und dem Roboterflansch 13 zu bestimmen. Diese Kalibrierung wird weiter unten genauer erläutert.

In einem Verfahrensschritt S5 werden die bisher noch unbestimmten Orientierungen der x- und y-Achsen des Zielkoordinatensystems {r} $^0x_r$ beziehungsweise $^0y_r$ berechnet. Dazu wird zunächst überprüft, ob in der vorgegebenen Zielpose die Symmetrieachse 15, also die z-Achse des Zielkoordinatensystems {r} parallel oder kollinear zu der x-Achse $x_0$ des Referenzkoordinatensystems {0} ist. Ist dies nicht der Fall, werden die x- und y-Achsen des Zielkoordinatensystems {r} berechnet als

8

$$^0\mathbf{y}_r = {^0\mathbf{z}_r} \times \mathbf{x}_0 \quad \text{und} \quad {^0\mathbf{x}_r} = {^0\mathbf{y}_r} \times {^0\mathbf{z}_r} \qquad (1),$$

wobei x für das Kreuzprodukt oder Vektorprodukt steht.

Für den Fall, dass die Symmetrieachse 15, also $\mathbf{z}_r$ beziehungsweise $^0\mathbf{z}_r$ parallel oder kollinear ist zu der x-Achse $\mathbf{x}_0$ des Referenzkoordinatensystems {0}, so werden die x- und y-Achsen des Zielkoordinatensystems {r} berechnet als

$$^0\mathbf{x}_r = \mathbf{y}_0 \times {^0\mathbf{z}_r} \quad \text{und} \quad {^0\mathbf{y}_r} = {^0\mathbf{z}_r} \times {^0\mathbf{x}_r} \qquad (2).$$

Die Koordinatenachsen $\mathbf{x}_0$, $\mathbf{y}_0$, $\mathbf{z}_0$ des Referenzkoordinatensystems {0} können dann dabei beispielsweise gegeben oder definiert sein als Spaltenvektoren $\mathbf{x}_0 = (1\ 0\ 0)^T$, $\mathbf{y}_0 = (0\ 1\ 0)^T$ und $\mathbf{z}_0 = (0\ 0\ 1)^T$.

Die Koordinatenachsen des Zielkoordinatensystems {r} können dann als Spaltenvektoren einer Rotationsmatrix $^0\mathbf{R}_r$, also

$$^0\mathbf{R}_r = [\,{^0\mathbf{x}_r}\ {^0\mathbf{y}_r}\ {^0\mathbf{z}_r}\,]$$

zusammengefasst werden, welche die Zielorientierung des Zielkoordinatensystems {r} bezogen auf das Referenzkoordinatensystem {0} angibt.

In einem Verfahrensschritt S6 wird dann eine homogene Matrix $^0\mathbf{H}_r$ erzeugt aus der Rotationsmatrix $^0\mathbf{R}_r$, den drei Raumkoordinaten $^0\mathbf{t}_r$ als weiterem Spaltenvektor und einem zusätzlichen 1x4 Zeilenvektor der Form (0,0,0,1). Die homogene Matrix $^0\mathbf{H}_r$ ist also eine 4x4 Matrix, welche die Pose des Zielkoordinatensystems {r} in Bezug auf das Referenzkoordinatensystem {0} definiert.

In einem Verfahrensschritt S7 wird eine homogene Matrix $^0\mathbf{H}_f$ berechnet, welche eine zu der im Verfahrensschritt S6 berechneten Zielpose des Zielkoordinatensystems {r} korrespondierende Zielpose des Roboterflansches 13 in Bezug auf das Referenzkoordinatensystem {0} angibt. Dabei gilt

$$^0\mathbf{H}_f = {^0\mathbf{H}_r}\ {^r\mathbf{H}_f} \qquad ,$$

wobei $^r\mathbf{H}_f$ die entsprechende Pose des Roboterflansches 13 in Bezug auf das Zielkoordinatensystem {r} angibt.

$^r\mathbf{H}_f$ kann dabei im Rahmen der Kalibrierung im Verfahrensschritt S4 bestimmt werden. Sei {e} ein kartesisches Hilfskoordinatensystem mit Ursprung an der Spitze des Werkzeugs 4. Das Hilfskoordinatensystem {e} kann dabei eine zunächst beliebige Orientierung aufweisen. Vorteilhaft kann das Hilfskoordinatensystem {e} mittels eines Kalibrierungselements definiert werden. Dieses Kalibrierungselement kann ein optischer Zeiger sein, beispielsweise ein nadelförmiges oder nadelartiges Hilfswerkzeug mit einem daran angeordneten optischen Marker. Dieses Hilfswerkzeug kann dann wie die erwähnte Nadel durch das Werkzeug 4 geführt werden, sodass eine Spitze des Hilfswerkzeugs mit der Spitze des Werkzeugs 4 zusammenfällt. Eine Größe oder Dimension des Hilfswerkzeugs ist dabei bekannt, sodass durch Erfassen des in vorgegebener Lagebeziehung zu der Spitze des Hilfswerkzeugs an diesem angeordneten optischen Markers eine jeweils aktuelle Position der Spitze des Hilfswerkzeugs und damit in diesem Fall die Spitze des Werkzeugs 4 und der Ursprung des Zielkoordinatensystems {r} und auch des Hilfskoordinatensystems {e} bestimmbar ist. Dazu kann der an dem Hilfswerkzeug angeordnete optische Marker mittels der Kamera 17 erfasst werden, wobei zum Bestimmen von dessen Pose entsprechende von der Kamera 17 bereitgestellt Erfassungsdaten, also Kamera- oder Bilddaten mittels des Steuergerätes 18 verarbeitet werden.

Zusätzlich oder alternativ zu diesem Hilfswerkzeug kann der optische Marker 16 verwendet werden, wenn dieser in vorgegeben, insbesondere konstanter, Lagebeziehung zu der Spitze des Werkzeugs 4 an diesem angeordnet ist. Aus der bestimmten Pose des Markers 16 beziehungsweise des an dem Hilfswerkzeug angeordneten optischen Markers und einer zum entsprechenden Zeitpunkt dieser Kalibrierung jeweils aktuellen Pose des Roboterflansches 13 kann dann eine homogene Matrix $^f\mathbf{H}_e$ bestimmt werden. Diese homogene Matrix $^f\mathbf{H}_e$ gibt die aktuelle Pose des Hilfskoordinatensystems {e} zum Zeitpunkt der Kalibrierung in Bezug auf ein kartesisches Koordinatensystem {f} des Roboterflansches 13 an. Ein translatorische Anteil der homogenen Matrix $^f\mathbf{H}_e$ sei dabei gegeben als $^f\mathbf{t}_e$. $^f\mathbf{t}_e$ ist also ein Abstands- oder Translationsvektor zwischen dem Hilfskoordinatensystem {e} und dem Koordinatensystem {f} des Roboterflansches 13. Das Koordinatensystem {f} des Roboterflansches 13 kann dessen Pose beschreiben beziehungsweise zum Beschreiben von dessen Pose ohne weitere Koordinatentransformationen verwendet werden. Ein Ursprung dieses Koordinatensystems {f} des Roboterflansches 13 kann beispielsweise in einem Zentrum des Roboterflansches 13 angeordnet sein. Die aktuelle Pose des Roboterflansches 13 kann stets aus einer Robotersteuerung des Roboters 10, also beispielsweise anhand von jeweils aktuellen gemessenen Gelenkskoordinaten oder Gelenksstellungen und einem Kinematikmodell beziehungsweise einer Vorwärtskinematik des Roboters 10 bestimmt werden oder bekannt sein.

Da sowohl das Zielkoordinatensystem {r} als auch das Hilfskoordinatensystem {e} beide ihren jeweiligen Ursprung an der Spitze des Werkzeugs 4 haben, gilt

$$ {}^{\mathrm{f}}\mathbf{t}_{\mathrm{r}} = {}^{\mathrm{f}}\mathbf{t}_{\mathrm{e}} \qquad (3) \, . $$

Aus der erfassten Pose des Markers 16 beziehungsweise des an dem Hilfswerkzeug angeordneten Markers kann zudem eine Richtung des Hilfswerkzeugs beziehungsweise des Werkzeugs 4, also der Symmetrieachse 15 zum Zeitpunkt der Kalibrierung abgeleitet werden. Diese ist ausgedrückt in dem Referenzkoordinatensystem {0} gerade ${}^{0}\mathbf{z}_{\mathrm{r}}$. Entsprechende Anwendung der Gleichungen (1) beziehungsweise (2) liefert die zugehörige Rotationsmatrix ${}^{0}\mathbf{R}_{\mathrm{f}}$ und schließlich

$$ {}^{\mathrm{f}}\mathbf{R}_{\mathrm{r}} = {}^{0}\mathbf{R}_{\mathrm{f}}{}^{\mathrm{T}} \, {}^{0}\mathbf{R}_{\mathrm{r}} \qquad , $$

wobei ${}^{0}\mathbf{R}_{\mathrm{f}}$ den rotatorische Anteil der Pose des Roboterflansches 13 beziehungsweise des Koordinatensystems des Roboterflansches 13 in Bezug auf das Referenzkoordinatensystem {0} beziehungsweise der entsprechenden homogenen Matrix angibt und wie beschrieben aus der Robotersteuerung beziehungsweise der Vorwärtskinematik des Roboters 10 bekannt oder bestimmbar ist.

Die homogene Matrix ${}^{\mathrm{r}}\mathbf{H}_{\mathrm{f}}$ wird dann bestimmt aus dem Ergebnis ${}^{\mathrm{f}}\mathbf{R}_{\mathrm{r}}$ und der Beziehung (3), sodass die homogene Matrix ${}^{0}\mathbf{H}_{\mathrm{f}}$ vollständig bestimmt ist.

In einem Verfahrensschritt S8 wird dann, beispielsweise anhand eines Modells des Roboters 10, überprüft, ob die für die vorgegebene Zielposition des Werkzeugs 4 bestimmte zugehörige Zielpose ${}^{0}\mathbf{H}_{\mathrm{f}}$ des Roboterflansches 13 erreichbar ist. Dabei werden eine aktuelle Pose des Roboters 10 sowie gegebenenfalls vorhandene technische Limitierungen des Roboters 10 und/oder durch eine aktuelle Umgebung des Roboters 10 bedingte Limitierungen berücksichtigt. Ist die Pose ${}^{0}\mathbf{H}_{\mathrm{f}}$ für den Roboterflansch 13 nicht erreichbar oder einstellbar, so folgt das Verfahren einem Pfad 20 zu einem Verfahrensschritt S9.

Im Verfahrensschritt S9 wird das Zielkoordinatensystem {r} ausgehend von der bestimmten Orientierung für die Zielpose gemäß einer vorgegebenen Sequenz rotiert. Vorliegend ist als Sequenz die Folge ($\Theta$, -$\Theta$, 2$\Theta$, -2$\Theta$,..., k$\Theta$, -k$\Theta$,...) gegeben, wobei $\Theta$ ein relativ kleiner Winkel von vorliegend beispielhaft 5° ist, das Vorzeichen eine Rotationsrichtung angibt und k eine positive ganze Zahl ist. Hierdurch wird eine minimal erforderliche Rotation des Zielkoordinatensystems {r} eingeführt. Nach jeder solchen Rotation folgt das Verfahren einem Pfad 21 zu einem Verfahrensschritt S10.

Im Verfahrensschritt S10 wird für die jeweils aktuelle rotierte Pose oder Orientierung des Zielkoordinatensystems {r} die zugehörige resultierende Zielpose ${}^{0}\mathbf{H}_{\mathrm{f}}$ für den Roboterflansch 13 bestimmt.

Anschließend wird einem Pfad 22 folgend erneut die Überprüfung durchgeführt, ob die neue, also jeweils aktuelle Zielpose ${}^{0}\mathbf{H}_{\mathrm{f}}$ des Roboterflansches 13 erreichbar ist. Die Verfahrensschritte S8, S9 und S10 können dazu also schleifenartig oder iterativ durchlaufen werden, solange bis eine durch den Roboter 10 erreichbare oder einstellbare Zielpose ${}^{0}\mathbf{H}_{\mathrm{f}}$ für den Roboterflansch 13 gefunden ist.

Sobald eine erreichbare Zielpose ${}^{0}\mathbf{H}_{\mathrm{f}}$ für den Roboterflansch 13 gefunden ist, folgt das Verfahren einem Pfad 23 zu einem Verfahrensschritt S11.

Im Verfahrensschritt S11 erzeugt das Steuergerät 18 ein Steuersignal für den Roboter 10, mittels welchem der Roboterflansch 13 aus der aktuellen Pose des Roboters 10 in die bestimmte Zielpose ${}^{0}\mathbf{H}_{\mathrm{f}}$ bewegbar oder überführbar ist.

Anschließend wird dieses Steuersignal in einem Verfahrensschritt S12 an den Roboter 10 übermittelt und dementsprechend der Roboterflansch 13 in der bestimmten Zielpose ${}^{0}\mathbf{H}_{\mathrm{f}}$ positioniert, wodurch das Werkzeug 4 in die vorgegebene Zielpose gelangt.

Im Gegensatz zu der eingangs anhand von FIG 1 beschriebenen herkömmlichen Methodik, liefert das hier beschriebene Verfahren für die Endpose 3 die gleiche Orientierung der x-Achse $\mathbf{x}_{\mathrm{r}}$ und der zweiten Achse 6 wie in der Startpose 2. Da in dem dargestellten Beispiel die z-Achse ${}^{0}\mathbf{z}_{\mathrm{r}}$, also die Symmetrieachse 15 des Werkzeugs 4, in der Startpose 2 und in der Endpose 3 gleich ist, sind die beispielsweise gemäß Gleichung (1) bestimmten x- und y-Achsen des Zielkoordinatensystems {r} für die Startpose 2 und die Endpose 3 beziehungsweise zwischen diesen beiden Posen 2, 3, also für die Bewegung von der Startpose 2 bis in die Endpose 3, gleich. Das bedeutet, dass das Werkzeug 4 bei dem Bewegen oder Verstellen von der Startpose 2 in die Endpose 3 die gleiche Orientierung beibehält, sodass keinerlei rotatorische Bewegung des Werkzeugs 4 auftritt. Dadurch bleibt der Marker 16 sowohl in der Startpose 2 als auch in der Endpose 3 beziehungsweise zwischen diesen beiden Posen 2, 3 sichtbar, was vorteilhaft eine verbesserte Nachverfolgbarkeit und letztlich eigenen sichereren Betrieb des Roboters 10 ermöglicht.

**Patentansprüche**

1. Verfahren (19) zum Betreiben eines Roboters (10) zum Positionieren eines Werkzeugs (4) in einer Zielpose, wobei der Roboter (10) einen Roboterfuß (11) und einen sich daran anschließenden beweglichen Roboterarm (12) aufweist, an dessen distalem Ende ein Roboterflansch (13) angeordnet ist, an dem das Werkzeug (4) gehalten ist, mit den Verfahrensschritten

   - Vorgeben einer Achse (15) des Werkzeugs (4),
   - Vorgeben eines kartesischen Referenzkoordinatensystems {0} mit Ursprung an dem Roboterfuß (11),
   - Vorgeben eines kartesischen Zielkoordinatensystems {r} mit Ursprung an einem Punkt des Werkzeugs (4), einer der Achse (15) des Werkzeugs (4) entsprechenden z-Achse und je einer x-Achse und y-Achse mit zunächst unbestimmten Orientierungen,
   - Vorgeben von 3D Raumkoordinaten des Punktes des Werkzeugs (4) und einer Orientierung der Achse (15), jeweils ausgedrückt in dem Referenzkoordinatensystem {0}, als Teil der Zielpose für das Werkzeug (4), **dadurch gekennzeichnet, dass** das Verfahren folgende Schritte aufweist
   - Berechnen der im Referenzkoordinatensystem {0} ausgedrückten Orientierungen der x-Achse und der y-Achse des Zielkoordinatensystems {r} durch

      - ein erstes Kreuzprodukt aus der vorgegebenen Orientierung der Achse (15) und einem dazu nicht parallelen Richtungsvektors einer Koordinatenachse ($x_0$, $y_0$, $z_0$) des Referenzkoordinatensystems {0}, und
      - ein zweites Kreuzprodukt aus einem Ergebnis des ersten Kreuzproduktes und der in dem Referenzkoordinatensystem {0} ausgedrückten vorgegebenen Orientierung der Achse (15),

   - Erzeugen einer 4x4 Matrix, welche eine Pose $^0\mathbf{H}_r$ des Zielkoordinatensystems {r} in Bezug auf das Referenzkoordinatensystem {0} definiert, aus den jeweils in dem Referenzkoordinatensystem {0} ausgedrückten Orientierungen der Koordinatenachsen ($^0\mathbf{x}_r$, $^0\mathbf{y}_r$, $^0\mathbf{z}_r$) des Zielkoordinatensystems {r} und 3D Raumkoordinaten ($^0\mathbf{t}_r$) des Punktes des Werkzeugs (4) sowie aus einem zusätzlichen 1x4 Zeilenvektor.

2. Verfahren (19) nach Anspruch 1, **dadurch gekennzeichnet, dass** durch das erste Kreuzprodukt die Orientierung $^0\mathbf{y}_r$ der y-Achse des Zielkoordinatensystems {r} berechnet wird als

$$^0\mathbf{y}_r \ = \ ^0\mathbf{z}_r \ \times \ \mathbf{x}_0$$

und durch das zweite Kreuzprodukt die Orientierung $^0\mathbf{x}_r$ der x-Achse des Zielkoordinatensystems {r} berechnet wird als

$$^0\mathbf{x}_r \ = \ ^0\mathbf{y}_r \ \times \ ^0\mathbf{z}_r \quad ,$$

wobei für den Fall, dass die der vorgegebenen Achse (15) des Werkzeugs (4) entsprechende z-Achse des Zielkoordinatensystems {r} parallel ist zu der x-Achse $\mathbf{x}_0$ des Referenzkoordinatensystems {0}, die Orientierungen $^0\mathbf{x}_r$ und $^0\mathbf{y}_r$ durch das erste und zweite Kreuzprodukt berechnet werden als

$$^0\mathbf{x}_r \ = \ \mathbf{y}_0 \ \times \ ^0\mathbf{z}_r \quad \text{und} \quad ^0\mathbf{y}_r \ = \ ^0\mathbf{z}_r \ \times \ ^0\mathbf{x}_r \quad ,$$

wobei jeweils $\mathbf{x}_0$ und $\mathbf{y}_0$ die x- beziehungsweise y-Achsen des Referenzkoordinatensystems {0} und $^0\mathbf{x}_r$, $^0\mathbf{y}_r$, $^0\mathbf{z}_r$ die Koordinatenachsen des Zielkoordinatensystems {r} ausgedrückt im Referenzkoordinatensystem {0} in vektorieller Form angeben.

3. Verfahren (19) nach einem der vorhergehenden Ansprüche, **dadurch gekennzeichnet, dass** eine zu der Pose $^0\mathbf{H}_r$ des Zielkoordinatensystems {r} korrespondiere und in diesem ausgedrückte Pose $^r\mathbf{H}_f$ des Roboterflansches (13) bestimmt wird aus einer vorgegebenen Kalibrierung, welche eine räumliche Lagebeziehung zwischen dem Punkt des Werkzeugs (4) und dem Roboterflansch (13) angibt.

4. Verfahren (19) nach Anspruch 3, **dadurch gekennzeichnet, dass**

- für die Kalibrierung ein, insbesondere optischer, Marker in vorgegebener Lagebeziehung zu dem Punkt des Werkzeugs (4) an diesem oder an dem Roboter (10) angeordnet und mittels einer Erfassungseinrichtung (17), welche in einer vorgegebenen Lagebeziehung zu dem Roboterfuß (11) angeordnet ist, in einem Hilfskoordinatensystem {e} mit Ursprung an dem Punkt des Werkzeugs (4) und relativ zum Zielkoordinatensystem {r} zunächst unbestimmter Orientierung erfasst wird,
- aus von der Erfassungseinrichtung (17) bereitgestellten entsprechenden Erfassungsdaten des Markers eine räumliche Lagebeziehung des Hilfskoordinatensystem {e} relativ zu dem Roboterflansch (13) bestimmt wird, und
- die Pose $^{r}\mathbf{H}_f$ des Roboterflansches (13) bestimmt wird aus den im Referenzkoordinatensystem {0} ausgedrückten Orientierungen der Achsen ($^{0}\mathbf{x}_r$, $^{0}\mathbf{y}_r$, $^{0}\mathbf{z}_r$) des Zielkoordinatensystems {r} und einer vorgegebenen Vorwärtskinematik des Roboters (10) unter Ausnutzung der Ursprungsgleichheit des Zielkoordinatensystems {r} und des Hilfskoordinatensystems {e}.

5. Verfahren (19) nach einem der Ansprüche 3 und 4, **dadurch gekennzeichnet, dass** aus den Posen $^{0}\mathbf{H}_r$ und $^{r}\mathbf{H}_f$ eine zu der bestimmten Pose $^{0}\mathbf{H}_r$ des Zielkoordinatensystems {r} korrespondierende Pose $^{0}\mathbf{H}_f$ des Roboterflansches (13) in Bezug auf das Referenzkoordinatensystem {0} bestimmt wird als

$$^{0}\mathbf{H}_f = {}^{0}\mathbf{H}_r \; {}^{r}\mathbf{H}_f \quad .$$

6. Verfahren (19) nach einem der vorhergehenden Ansprüche, **dadurch gekennzeichnet, dass** aus den bestimmten Größen und einem vorgegebenen Kinematikmodell des Roboters (10) automatisch ein Steuersignal für den Roboter (10) erzeugt wird, durch welches der Roboter (10) aus seiner jeweils aktuellen Pose so bewegt wird, dass das Werkzeug (4) in die für dieses vorgegebene Zielpose überführt wird.

7. Verfahren (19) nach einem der vorhergehenden Ansprüche, **dadurch gekennzeichnet, dass** anhand eines vorgegebenen Kinematikmodells des Roboters (10) automatisch überprüft wird, ob die für das Werkzeug (4) vorgegebene Zielpose durch den Roboter (10) erreichbar ist, und wenn dies nicht der Fall ist, das Zielkoordinatensystem {r} solange bis eine erreichbare Zielpose gefunden ist um vorgegebene, inkrementell ansteigende Winkelbeträge abwechselnd in positive und negative Richtung um seine z-Achse rotiert wird, wobei

- für jede Rotation in Bezug auf eine jeweils vorhergehende Rotation eine Rotationsrichtung gewechselt und der jeweils nächst größere der vorgegebenen Winkelbeträge verwendet wird, und
- nach jeder Rotation die Überprüfung erneut durchgeführt wird.

8. Datenspeicher mit einem Programmcode, der die Verfahrensschritte eines Verfahrens (19) nach einem der vorhergehenden Ansprüche kodiert.

9. Roboter (10) mit einem Steuergerät (18) zum Steuern des Roboters (10), welches einen Datenspeicher nach Anspruch 8 und eine mit diesem verbundene Prozessoreinrichtung zum Ausführen des Programmcodes umfasst, und mit einer Schnittstelle zum Empfangen von Vorgaben.

10. Robotersystem (10, 12, 16, 17, 18), umfassend einen Roboter (10) nach Anspruch 9 und eine mit diesem gekoppelte und in einer vorgegebenen Lagebeziehung zu diesem angeordnete Erfassungseinrichtung (17) zum Erfassen eines an dem Roboter (10) angeordneten, insbesondere optischen, Markers (16), wobei das Robotersystem (10, 12, 16, 17, 18) dazu eingerichtet ist, aus von der Erfassungseinrichtung (17) bereitgestellten Erfassungsdaten automatisch eine Orientierung des Markers (16) zu bestimmen.

## Claims

1. Method (19) for operating a robot (10) for positioning a tool (4) in a target pose, wherein the robot (10) comprises a robot foot (11) and a movable robot arm (12) attached thereto on the distal end of which a robot flange (13) is arranged, on which the tool (4) is held, with the method steps

- specification of an axis (15) of the tool (4),
- specification of a Cartesian reference coordinate system {0} originating on the robot foot (11),
- specification of a Cartesian target coordinate system {r} originating on a point of the tool (4), a z-axis corresponding to the axis (15) of the tool (4) and an x-axis and a y-axis each with initially indeterminate orientations,
- specification of 3D spatial coordinates of the point of the tool (4) and an orientation of the axis (15), expressed in each case in the reference coordinate system {0}, as part of the target pose for the tool (4), **characterised in that** the method has the following steps
- calculation of the orientations of the x-axis and the y-axis of the target coordinate system {r} expressed in the reference coordinate system {0} by

- a first cross product of the specified orientation of the axis (15) and a direction vector, which is not parallel thereto, of a coordinate axis ($x_0$, $y_0$, $z_0$) of the reference coordinate system {0}, and
- a second cross product of a result of the first cross product and the specified orientation of the axis (15) expressed in the reference coordinate system {0},

- creation of a 4x4 matrix, which defines a pose $^0H_r$ of the target coordinate system {r} with reference to the reference coordinate system {0} from the orientations of the coordinate axes ($^0x_r$, $^0y_r$, $^0z_r$) of the target coordinate system {r} expressed in each case in the reference coordinate system {0} and 3D spatial coordinates ($^0t_r$) of the point of the tool (4) and from an additional 1x4 line vector.

2. Method (19) according to claim 1, **characterised in that** the orientation $^0y_r$ of the y-axis of the target coordinate system {r} is calculated by the first cross product as

$$^0\mathbf{y}_r = {}^0\mathbf{z}_r \times \mathbf{x}_0$$

and the orientation $^0x_r$ of the x-axis of the target coordinate system {r} is calculated by the second cross product as

$$^0\mathbf{x}_r = {}^0\mathbf{y}_r \times {}^0\mathbf{z}_r,$$

wherein in the event that the z-axis of the target coordinate system {r} corresponding to the specified axis (15) of the tool (4) is parallel to the x-axis $x_0$ of the reference coordinate system {0}, the orientations $^0x_r$ and $^0y_r$ are calculated by the first and second cross product as

$$^0\mathbf{x}_r = \mathbf{y}_0 \times {}^0\mathbf{z}_r \text{ and } 0\mathbf{y}_r = {}^0\mathbf{z}_r \times {}^0\mathbf{x}_r,$$

wherein in each case $x_0$ and $y_0$ indicate the x- or y-axes of the reference coordinate system {0} and $^0x_r$, $^0y_r$, $^0z_r$ indicate the coordinate axes of the target coordinate system {r} expressed in the reference coordinate system {0} in vector form.

3. Method (19) according to one of the preceding claims, **characterised in that** a pose $^rH_f$ of the robot flange (13) corresponding to the pose $^0H_r$ of the target coordinate system {r} and expressed therein is determined from a specified calibration, which indicates a spatial positional relationship between the point of the tool (4) and the robot flange (13).

4. Method (19) according to claim 3, **characterised in that**

- for the calibration, a marker, in particular an optical marker, in a specified positional relationship to the point of the tool (4) is arranged thereupon or on the robot (10) and detected by means of a detection facility (17), which is arranged in a specified positional relationship to the robot foot (11), in an auxiliary coordinate system {e} originating at the point of the tool (4) and with an initially indeterminate orientation relative to the target coordinate system {r},
- a spatial positional relationship of the auxiliary coordinate system {e} relative to the robot flange (13) is determined from the corresponding detection data of the marker provided by the detection facility (17), and
- the pose $^rH_f$ of the robot flange (13) is determined from the orientations of the axes ($^0x_r$, $^0y_r$, $^0z_r$) of the target

coordinate system {r} expressed in the reference coordinate system {0} and specified forward kinematics of the robot (10) using the identical origin of the target coordinate system {r} and the auxiliary coordinate system {e}.

5. Method (19) according to one of claims 3 and 4, **characterised in that**, from the poses $^0\mathbf{H}_r$ and $^r\mathbf{H}_f$, a pose $^0\mathbf{H}_f$ of the robot flange (13) corresponding to the determined pose $^0\mathbf{H}_r$ of the target coordinate system {r} is determined with reference to the reference coordinate system {0} as

$$^0\mathbf{H}_f = {^0\mathbf{H}_r} \; {^r\mathbf{H}_f} \; .$$

6. Method (19) according to one of the preceding claims, **characterised in that** a control signal for the robot (10) is automatically created from the variables determined and a specified kinematic model of the robot (10) by means of which the robot (10) is moved out of its current pose in each case such that the tool (4) is transferred into the specified target pose specified therefor.

7. Method (19) according to one of the preceding claims, **characterised in that** a specified kinematic model of the robot (10) is used automatically to check whether the target pose specified for the tool (4) can be achieved by the robot (10), and, if is not the case, the target coordinate system {r} is rotated by specified incrementally increasing angular amounts alternately in positive and negative directions about its z-axis until an achievable target pose is found, wherein

- for each rotation, the direction of rotation is changed with reference to a preceding rotation in each case and the next higher of the specified angular amounts is used in each case, and
- the check is performed again after each rotation.

8. Data memory with program code that codes the method steps of a method (19) according to one of the preceding claims.

9. Robot (10) with a control device (18) for controlling the robot (10), which includes a data memory according to claim 8 and a processor facility connected thereto for executing the program code, and with an interface for receiving specifications.

10. Robot system (10, 12, 16, 17, 18) including a robot (10) according to claim 9 and a detection facility (17) coupled thereto and arranged in a specified positional relationship thereto for detecting a marker (16), in particular an optical marker, arranged on the robot (10), wherein the robot system (10, 12, 16, 17, 18) is configured automatically to determine an orientation of the marker (16) from detection data provided by the detection facility (17).

**Revendications**

1. Procédé (19) pour faire fonctionner un robot (10) de mise d'un outil (4) en position dans une pose cible, le robot (10) ayant un pied (11) de robot et un bras (12) de robot mobile, qui s'y raccorde et à l'extrémité distale duquel est montée une bride (13) de robot où l'outil (4) est retenu, comprenant les stades de procédé

- prescription d'un axe (15) de l'outil (4),
- prescription d'un système (0) cartésien de coordonnées de référence ayant une origine sur le pied (11) du robot,
- prescription d'un système (r) cartésien de coordonnées cible ayant une origine en un point de l'outil (4), un axe z correspondant à l'un des axes (15) de l'outil (4) et, respectivement, un axe x et un axe y d'orientations d'abord indéterminées,
- prescription de coordonnées dans l'espace en 3D du point de l'outil (4) et d'une orientation de l'axe (15), exprimées, respectivement, dans le système (0) de coordonnées de référence, comme partie de la pose cible pour l'outil (4),

**caractérisé en ce que** le procédé a les stades suivants

- calcul des orientations, exprimées dans le système (0) de coordonnées de référence, de l'axe x et de l'axe y du système (r) de coordonnées cible, par

- un premier produit croisé de l'orientation donnée à l'avance de l'axe (15) par un vecteur directionnel, qui n'y est pas parallèle, d'un axe ($\mathbf{x}_0$, $\mathbf{y}_0$, $\mathbf{z}_0$) de coordonnées du système (0) de coordonnées de référence, et
- un deuxième produit croisé d'un résultat du premier produit croisé par l'orientation prescrite, exprimée dans le système (0) de coordonnées de référence, de l'axe (15),

- production d'une matrice 4x4, qui définit une pose $^0\mathbf{H}_r$ du système (r) de coordonnées cible par rapport au système (0) de coordonnées de référence, à partir des orientations exprimées dans le système (0) de coordonnées de référence des axes ($^0\mathbf{x}_r$, $^0\mathbf{y}_r$, $^0\mathbf{z}_r$) de coordonnées du système (r) de coordonnées cible et de coordonnées ($^0\mathbf{t}_r$) dans l'espace en 3D du point de l'outil (4), ainsi que d'un vecteur ligne 1x4 supplémentaire.

2. Procédé (19) suivant la revendication 1, **caractérisé en ce que**, par le premier produit croisé, on calcule l'orientation $^0\mathbf{y}_r$ de l'axe y du système (r) de coordonnées cible par

$$^0\mathbf{y}_r \; = \; ^0\mathbf{z}_r \; \times \; \mathbf{x}_0$$

et par le deuxième produit croisé, on calcule l'orientation $^0\mathbf{x}_r$ de l'axe x du système (r) de coordonnées cible par

$$^0\mathbf{x}_r \; = \; ^0\mathbf{y}_r \; \times \; ^0\mathbf{z}_r,$$

dans lequel dans le cas où l'axe z, correspondant à l'axe (15) prescrit de l'outil (4), du système (r) de coordonnées cible est parallèle à l'axe x $\mathbf{x}^0$ du système (0) de coordonnées de référence, on calcule les orientations $^0\mathbf{x}_r$ et $^0\mathbf{y}_r$ par le premier et le deuxième produits croisé par

$$^0\mathbf{x}_r \; = \; \mathbf{y}_0 \; \times \; ^0\mathbf{z}_r \; \text{et} \; ^0\mathbf{y}_r \; = \; ^0\mathbf{z}_r \; \times \; ^0\mathbf{x}_r,$$

dans lesquelles, respectivement, $\mathbf{x}_0$ et $\mathbf{y}_0$ indiquent, sous forme vectorielle, exprimés dans le système (0) de coordonnées de référence, les axes x et respectivement y du système (0) de coordonnées de référence et $^0\mathbf{x}_r$, $^0\mathbf{y}_r$, $^0\mathbf{z}_r$ les axes de coordonnées du système (r) de coordonnées cible exprimés dans le système (0) de coordonnées de référence.

3. Procédé (19) suivant l'une des revendications précédentes, **caractérisé en ce que** l'on détermine une pose $^0\mathbf{H}_r$, correspondant à la pose $^r\mathbf{H}_f$ du système (r) de coordonnées cible et exprimée dans celui-ci, de la bride (13) du robot, à partir d'un étalonnage donné à l'avance, qui indique une relation de position dans l'espace entre le point de l'outil (4) et la bride (13) du robot.

4. Procédé (19) suivant la revendication 3, **caractérisé en ce que**

- pour l'étalonnage, on détecte un marqueur, notamment optique, disposé en une relation de position donnée à l'avance par rapport au point de l'outil (4) sur celui-ci ou sur le robot (10) et au moyen d'un dispositif (17) de détection, qui est disposé dans une relation de position donnée à l'avance par rapport au pied (11) du robot, dans un système (e) de coordonnées auxiliaire ayant une origine au point de l'outil (4) et par rapport au système (r) de coordonnées cible d'abord d'orientation indéterminée,
- à partir de données de détection, procurées par le dispositif (17) de détection, du marqueur, on détermine une relation de position dans l'espace du système (e) de coordonnées auxiliaire par rapport à la bride (13) du robot, et
- on détermine la pose $^r\mathbf{H}_f$ de la bride (13) du robot à partir des orientations, exprimées dans le système (0) de coordonnées de référence, des axes ($^0\mathbf{x}_r$, $^0\mathbf{y}_r$, $^0\mathbf{z}_r$) du système (r) de coordonnées cible et d'une cinématique d'avance donnée à l'avance du robot (10), en tirant parti de l'identité d'origine du système (r) de coordonnées cible et du système (e) de coordonnées auxiliaire.

5. Procédé (19) suivant l'une des revendications 3 et 4, **caractérisé en ce qu'**à partir des poses $^0\mathbf{H}_r$ et $^r\mathbf{H}_f$, on détermine une pose $^0\mathbf{H}_f$, correspondant à la pose $^0\mathbf{H}_r$ déterminée du système (r) de coordonnées cible, de la bride (13) du robot par rapport au système (0) de coordonnées de référence par

$$^{0}\mathbf{H}_{f} \;=\; ^{0}\mathbf{H}_{r} \; ^{r}\mathbf{H}_{f}.$$

6. Procédé (19) suivant l'une des revendications précédentes, **caractérisé en ce qu'**à partir des grandeurs déterminées et d'un modèle de cinématique donné à l'avance du robot (10), on produit automatiquement un signal de commande du robot (10), par lequel on déplace le robot (10) de sa pose en cours respective, de façon à faire passer l'outil (4) dans la pose cible prescrite pour celui-ci.

7. Procédé (19) suivant l'une des revendications précédentes, **caractérisé en ce qu'**à l'aide d'un modèle cinématique donné à l'avance du robot (10), on contrôle automatiquement si la pose cible prescrite à l'outil (4) peut être atteinte par le robot (10), et si ce n'est pas le cas, on fait tourner autour de son axe z, dans le sens positif et négatif, en alternance, d'un montant angulaire croissant, de manière incrémentielle, donné à l'avance, le système (r) de coordonnées cible jusqu'à ce qu'une pose cible accessible soit trouvée, dans lequel

   - pour chaque rotation par rapport à une rotation précédente, on change le sens de rotation et on utilise le montant angulaire suivant le plus grand des montants angulaires donnés à l'avance, et
   - après chaque rotation, on effectue le contrôle à nouveau.

8. Mémoire de données ayant un code de programme, qui code les stades d'un procédé (19) suivant l'une des revendications précédentes.

9. Robot (10) ayant un appareil (18) de commande pour commander le robot (10), qui comprend une mémoire de données suivant la revendication 8 et un dispositif de processeur relié à celle-ci pour exécuter le code de programme, et ayant une interface de réception de prescriptions.

10. Système (10, 12, 16, 17, 18) de robot, comprenant un robot (10) suivant la revendication 9 et un dispositif (17) de détection couplé à celui-ci est disposé dans une relation de position donnée à l'avance par rapport à celui-ci pour détecter un marqueur, notamment optique, disposé sur le robot (10), le système (10, 12, 16, 17, 18) de robot étant conçu pour déterminer automatiquement l'orientation du marqueur (16) à partir de données de détection procurées par le dispositif (17) de détection.

FIG 1
(Stand der Technik)

FIG 2

17

13

15

14

16

$^0y_r$

$x_0$

$\{r\}$

$^0z_r$

4

10, 12

$z_0$

$x_0$

11

$\{0\}$

$y_0$

18

18

EP 3 581 341 B1

## FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1591209 A